# FASCICULE DE BREVET EUROPEEN

(11) **EP 2 024 084 B1**
(45) Date de publication et mention de la délivrance du brevet: **10.07.2019**
(21) Numéro de dépôt: 07728850.4
(22) Date de dépôt: 07.05.2007
(51) Int. Cl.: B01J 23/10, B01J 21/06, B01J 37/03, B01J 37/08, B01D 53/94, B01J 35/10

(54) **COMPOSITION A BASE D'OXYDES DE ZIRCONIUM, DE CERIUM, DE LANTHANE ET D'YTTRIUM, DE GADOLINIUM OU DE SAMARIUM, A SURFACE SPECIFIQUE ET REDUCTIBILITE ELEVEES, ET UTILISATION COMME CATALYSEUR**
ZUSAMMENSETZUNG AUF BASIS VON OXIDEN VON ZIRCONIUM, CER UND LANTHAN UND VON YTTRIUM, GADOLINIUM ODER SAMARIUM MIT HOHER SPEZIFISCHER OBERFLÄCHE UND REDUZIERBARKEIT, VERWENDUNG ALS KATALYSATOR
COMPOSITION BASED ON OXIDES OF ZIRCONIUM, CERIUM AND LANTHANUM AND OF YTTRIUM, GADOLINIUM OR SAMARIUM, WITH HIGH SPECIFIC SURFACE AND REDUCIBILITY, AND USE AS A CATALYST

(30) Priorité: 15.05.2006 FR 0604287; 16.11.2006 FR 0610033
(43) Date de publication de la demande: 18.02.2009
(73) Titulaire: Rhodia Opérations, 93306 Aubervilliers (FR)
(72) Inventeur: LARCHER, Olivier, 17180 Perigny (FR); VERDIER, Stephan, 69008 Lyon (FR); ROHART, Emmanuel, 17220 Sainte Soulle (FR)
(74) Mandataire: Senninger, Thierry
(86) Numéro de dépôt international: PCT/EP2007/054397
(87) Numéro de publication internationale: WO 2007/131901

(56) Documents cités:
- EP-A1- 2 223 905
- WO-A-98/16472
- WO-A-98/45212
- WO-A-03/020643
- WO-A-2004/085039
- WO-A-2004/085806
- WO-A-2007/093593
- WO-A-2007/107546
- WO-A1-2017/173018
- WO-A2-02/072256
- WO-A2-2004/002893
- WO-A2-2004/085314
- WO-A2-2005/023728
- WO-A2-2011/138255
- US-A1- 2007 244 002
- US-B1- 6 387 338

## Description

La présente invention concerne une composition à base d'un oxyde de zirconium, d'un oxyde de cérium, d'un oxyde de lanthane et d'un oxyde d'une autre terre rare choisie parmi l'yttrium, le gadolinium et le samarium, à surface spécifique stable et son utilisation dans le traitement des gaz d'échappement des automobiles.

On utilise à l'heure actuelle pour le traitement des gaz d'échappement des moteurs à combustion interne (catalyse postcombustion automobile) des catalyseurs dits multifonctionnels. Par multifonctionnels, on entend les catalyseurs capables d'opérer non seulement l'oxydation en particulier du monoxyde de carbone et des hydrocarbures présents dans les gaz d'échappement mais également la réduction notamment des oxydes d'azote également présents dans ces gaz (catalyseurs "trois voies"). L'oxyde de zirconium et l'oxyde de cérium apparaissent aujourd'hui comme deux constituants particulièrement importants et intéressants de matériaux rentrant dans la composition de ce type de catalyseurs. Pour être efficaces dans une telle utilisation, ces matériaux doivent présenter une surface spécifique qui reste suffisamment importante même à température élevée.

Il est connu d'utiliser en combinaison avec le zirconium et le cérium d'autres terres rares pour obtenir des matériaux présentant une surface spécifique satisfaisante. Toutefois, il s'agit dans certains cas de combinaisons complexes car elles comprennent jusqu'à trois autres terre rares en plus des éléments zirconium et cérium. En outre, on cherche toujours à améliorer cette stabilité de surface, c'est-à-dire à obtenir des valeurs de surface encore plus grandes à même température ou toujours suffisamment importantes à des températures encore plus élevées.

Il y a donc un besoin pour des matériaux à surface spécifique à stabilité de surface augmentée et, si possible, dont les compositions ne soient pas trop complexes.

L'invention a pour pour premier objet des produits qui répondent à ce besoin.

Par ailleurs, une autre qualité requise pour les matériaux précités est leur réductibilité. On entend par réductibilité, ici et pour le reste de la description, le taux de cérium IV dans ces matériaux susceptible de se transformer en cérium III sous l'effet d'une atmosphère réductrice et à une température donnée. Cette réductibilité peut se mesurer par exemple par une consommation d'hydrogène dans un domaine de température donné. Elle est due au cérium qui a la propriété de se réduire ou de s'oxyder. Cette réductibilité doit, bien sûr, être la plus élevée possible.

Il est donc intéressant d'obtenir des produits présentant à la fois une réductibilité élevée et une surface spécifique stabilisée, c'est-à-dire présentant une valeur de surface suffisante à haute température.

Un second objet de l'invention est donc la mise au point d'une composition pouvant offrir une combinaison intéressante de ces propriétés.

Dans ce but, la composition selon l'invention est telle que définie à la revendication 1.

D'autres caractéristiques, détails et avantages de l'invention apparaîtront encore plus complètement à la lecture de la description qui va suivre, faite notamment en référence aux dessins annexés dans lesquels :
- la figure 1 est un diffractogramme obtenu par diffraction des rayons X sur une composition de l'invention;
- la figure 2 est un diffractogramme obtenu par diffraction des rayons X sur une autre composition de l'invention.

Pour la suite de la description, on entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

On précise pour la suite de la description que, sauf indication contraire, dans les fourchettes de valeurs qui sont données, les valeurs aux bornes sont incluses.

Les teneurs ou taux en éléments sont donnés en masse d'oxyde de ces éléments sauf indication contraire, ces oxydes pour l'expression de ces teneurs étant considérés sous la forme de l'oxyde cérique pour le cérium, sous la forme Ln₂O₃ pour les autres terres rares.

Les valeurs de surface spécifique qui sont indiquées pour une température et une durée données correspondent, sauf indication contraire, à des calcinations sous air à un palier de température sur la durée indiquée.

Les compositions selon l'invention consistent en un mélange de quatre oxydes des éléments zirconium, cérium, lanthane et d'une autre terre rare qui est soit l'yttrium, soit le samarium, soit le gadolinium. En conséquence, la composition considérée ne contient que les oxydes des quatre éléments précités et elle ne contient pas d'oxyde d'un autre élément, par exemple d'une autre terre rare, susceptible d'avoir une influence positive sur la stabilité de la surface spécifique de la composition. Par contre, la composition peut contenir des impuretés pouvant notamment provenir de son procédé de préparation, par exemple des matières premières ou des réactifs de départ utilisés.

Les compositions de l'invention présentent une teneur pour l'ensemble oxyde de lanthane / oxyde de l'autre terre rare qui est comprise entre 15% et 35%. Au-delà de 35% l'effet sur la stabilité de la surface peut ne plus être sensible.

Les compositions présentent une teneur en lanthane d'au moins 2%. Les proportions relatives entre le lanthane et l'autre terre rare peuvent varier dans une large gamme. Un rapport de la teneur en lanthane à celle en l'autre terre rare (rapport masse d'oxyde de lanthane/masse d'oxyde de l'autre terre rare) inférieur à 1,5, voire inférieur à 1, peut être préférable pour obtenir des produits à surface les plus élevées.

La teneur en cérium est comprise entre 30% et 45% et encore plus particulièrement entre 40% et 45%.

Les compositions de l'invention sont par ailleurs caractérisées par les surfaces spécifiques qu'elles présentent à différentes températures.

Comme indiqué plus haut, elles présentent tout d'abord une surface spécifique après calcination 4 heures à 1000°C d'au moins 45 m²/g et encore plus préférentiellement d'au moins 50 m²/g. A titre d'exemple particulier uniquement, on peut mentionner que peuvent être atteintes des surfaces de 60 m²/g.

Les compositions de l'invention présentent ensuite une surface spécifique après calcination 10 heures à 1150°C d'au moins 15 m²/g, cette surface pouvant être même d'au moins 18 m²/g. A titre d'exemple particulier uniquement, on peut mentionner que des surfaces d'environ 23 m²/g peuvent être atteintes.

Les compositions de l'invention présentent ensuite une surface spécifique après calcination 10 heures à 1200°C qui est d'au moins 7 m²/g. Avantageusement, la surface spécifique après calcination 10 heures à 1200°C est d'au moins 10 m²/g. A titre d'exemple particulier uniquement, on peut mentionner que des surfaces d'environ 15 m²/g peuvent être atteintes.

Le procédé de préparation des compositions de l'invention va maintenant être décrit.

Le procédé est caractérisé en ce qu'il comprend les étapes suivantes :
- (a) on forme un mélange en milieu liquide comprenant des composés du zirconium, du cérium, du lanthane et de l'autre terre rare;
- (b) on met en présence ledit mélange avec un composé basique ce par quoi on obtient un précipité;
- (c) on chauffe en milieu liquide ledit précipité;
- (d) on ajoute au précipité obtenu à l'étape précédente un additif, choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (e) on lave le précipité à l'issue de l'étape (d);
- (f) on calcine le précipité ainsi obtenu.

La première étape (a) du procédé selon la première variante consiste donc à préparer un mélange en milieu liquide des composés des éléments constitutifs de la composition, c'est à dire du zirconium, du cérium, du lanthane et de l'autre terre rare.

Le mélange se fait généralement dans un milieu liquide qui est l'eau de préférence.

Les composés sont de préférence des composés solubles. Ce peut être notamment des sels de zirconium, de cérium, de lanthane et de l'autre terre rare. Ces composés peuvent être choisis parmi les nitrates, les sulfates, les acétates, les chlorures, les nitrates céri-ammoniacaux.

A titre d'exemples, on peut ainsi citer le sulfate de zirconium, le nitrate de zirconyle ou le chlorure de zirconyle. Le nitrate de zirconyle est utilisé le plus généralement. On peut citer aussi notamment les sels de cérium IV tels que nitrates ou nitrates céri-ammoniacaux par exemple, qui conviennent ici particulièrement bien. De préférence, on utilise du nitrate cérique. Il est avantageux d'utiliser des sels de pureté d'au moins 99,5% et plus particulièrement d'au moins 99,9%. Une solution aqueuse de nitrate cérique peut par exemple être obtenue par réaction de l'acide nitrique sur un oxyde cérique hydraté préparé d'une manière classique par réaction d'une solution d'un sel céreux, par exemple le nitrate céreux, et d'une solution d'ammoniaque en présence d'eau oxygénée. On peut également, de préférence, utiliser une solution de nitrate cérique obtenue selon le procédé d'oxydation électrolytique d'une solution de nitrate céreux tel que décrit dans le document FR-A- 2 570 087, et qui constitue ici une matière première intéressante.

On notera ici que les solutions aqueuses de sels de cérium et de sels de zirconyle peuvent présenter une certaine acidité libre initiale qui peut être ajustée par l'addition d'une base ou d'un acide. Il est cependant autant possible de mettre en oeuvre une solution initiale de sels de cérium et de zirconium présentant effectivement une certaine acidité libre comme mentionné ci-dessus, que des solutions qui auront été préalablement neutralisées de façon plus ou moins poussée. Cette neutralisation peut se faire par addition d'un composé basique au mélange précité de manière à limiter cette acidité. Ce composé basique peut être par exemple une solution d'ammoniaque ou encore d'hydroxydes d'alcalins (sodium, potassium,...), mais de préférence une solution d'ammoniaque.

On notera enfin que lorsque le mélange de départ contient du cérium essentiellement sous forme III, il est préférable de faire intervenir dans le cours du procédé un agent oxydant, par exemple de l'eau oxygénée. Cet agent oxydant peut être utilisé en étant ajouté au milieu réactionnel lors de l'étape (a) ou lors de l'étape (b) ou encore à la fin de celle-ci.

Il est aussi possible d'utiliser un sol comme composé de départ du zirconium ou du cérium. Par sol on désigne tout système constitué de fines particules solides de dimensions colloïdales, c'est à dire des dimensions comprises entre environ 1nm et environ 500nm, à base d'un composé de zirconium ou de cérium ce composé étant généralement un oxyde et/ou un oxyde hydraté de zirconium ou de cérium, en suspension dans une phase liquide aqueuse, lesdites particules pouvant en outre, éventuellement, contenir des quantités résiduelles d'ions liés ou adsorbés tels que par exemple des nitrates, des acétates, des chlorures ou des ammoniums. On notera que dans un tel sol, le zirconium ou le cérium peuvent se trouver soit totalement sous la forme de colloïdes, soit simultanément sous la forme d'ions et sous la forme de colloïdes.

Le mélange peut être indifféremment obtenu soit à partir de composés initialement à l'état solide que l'on introduira par la suite dans un pied de cuve d'eau par exemple, soit encore directement à partir de solutions de ces composés puis mélange, dans un ordre quelconque, desdites solutions.

Dans la deuxième étape (b) du procédé selon la première variante, on met en présence ledit mélange avec un composé basique. On peut utiliser comme base ou composé basique les produits du type hydroxyde. On peut citer les hydroxydes d'alcalins ou d'alcalino-terreux. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée. Le composé basique peut être plus particulièrement utilisé sous forme d'une solution.

La manière d'effectuer la mise en présence du mélange et du composé basique, c'est à dire l'ordre d'introduction de ceux-ci n'est pas critique. Toutefois, cette mise en présence peut se faire en introduisant le mélange dans le composé basique sous forme d'une solution. Cette manière de procéder est préférable pour obtenir les compositions de l'invention sous forme d'une solution solide pure.

La mise en présence ou la réaction entre le mélange et le composé basique, notamment l'addition du mélange dans le composé basique sous forme d'une solution, peut être effectuée en une seule fois, graduellement ou en continu, et elle est de préférence réalisée sous agitation. Elle est de préférence conduite à température ambiante.

L'étape suivante (c) du procédé selon la première variante est l'étape de chauffage du précipité en milieu aqueux.

Ce chauffage peut être réalisé directement sur le milieu réactionnel obtenu après réaction avec le composé basique ou sur une suspension obtenue après séparation du précipité du milieu réactionnel, lavage éventuel et remise dans l'eau du précipité. La température à laquelle est chauffé le milieu est habituellement d'au moins 100°C et elle est généralement comprise entre 100°C et 160°C. L'opération de chauffage peut être conduite en introduisant le milieu liquide dans une enceinte close (réacteur fermé du type autoclave). Dans les conditions de températures données ci-dessus, et en milieu aqueux, on peut ainsi préciser, à titre illustratif, que la pression dans le réacteur fermé peut varier entre une valeur supérieure à 1 Bar (10⁵ Pa) et 165 Bar (1,65. 10⁷ Pa), de préférence entre 5 Bar (5. 10⁵ Pa) et 165 Bar (1,65. 10⁷ Pa). On peut aussi effectuer le chauffage dans un réacteur ouvert pour les températures voisines de 100°C.

Le chauffage peut être conduit soit sous air, soit sous atmosphère de gaz inerte, de préférence l'azote.

La durée du chauffage peut varier dans de larges limites, par exemple entre 30 minutes et 48 heures, de préférence entre 1 et 5 heures. De même, la montée en température s'effectue à une vitesse qui n'est pas critique, et on peut ainsi atteindre la température réactionnelle fixée en chauffant le milieu par exemple entre 30 minutes et 4 heures, ces valeurs étant données à titre tout à fait indicatif.

Il est possible de faire plusieurs chauffages. Ainsi, on peut remettre en suspension dans l'eau, le précipité obtenu après l'étape de chauffage et éventuellement un ou plusieurs lavages puis effectuer un autre chauffage du milieu ainsi obtenu. Cet autre chauffage se fait dans les mêmes conditions que celles qui ont été décrites pour le premier.

L'étape suivante (d) du procédé consiste à ajouter au précipité issu de l'étape précédente un additif qui est choisi parmi les tensioactifs anioniques, les tensioactifs non ioniques, les polyéthylène-glycols et les acides carboxyliques et leurs sels ainsi que les tensioactifs du type éthoxylats d'alcools gras carboxyméthylés.

En ce qui concerne cet additif on pourra se référer à l'enseignement de la demande WO-98/45212 et utiliser les tensioactifs décrits dans ce document.

On peut mentionner comme tensioactifs du type anionique les éthoxycarboxylates, les acides gras éthoxylés, les sarcosinates, les esters phosphates, les sulfates comme les sulfates d'alcool les sulfates d'éther alcool et les éthoxylates d'alcanolamide sulfatés, les sulfonates comme les sulfosuccinates, les alkyl benzène ou alkyl naphtalène sulfonates.

Comme tensioactif non ionique on peut mentionner les tensioactifs acétyléniques, les éthoxylates d'alcool, les alcanolamides, les oxydes d'amine, les alcanolamides éthoxylés, les amines éthoxylées à longues chaînes, les copolymères oxyde d'éthylène/oxide de propylène, les dérivés du sorbiatan, l'éthylène glycol, le propylène glycol, le glycérol, les esters polyglyceryle et leurs dérivés éthoxylés, les alkylamines, les alkylimidazolines, les huiles éthoxylées et les éthoxylates d'alkylphénol. On peut citer notamment les produits vendus sous les marques IGEPAL®, DOWANOL®, RHODAMOX® et ALKAMIDE®.

En ce qui concerne les acides carboxyliques, on peut utiliser notamment les acides mono- ou dicarboxyliques aliphatiques et parmi ceux-ci plus particulièrement les acides saturés. On peut utiliser aussi des acides gras et plus particulièrement les acides gras saturés. On peut citer ainsi notamment les acides formique, acétique, proprionique, butyrique, isobutyrique, valérique, caproïque, caprylique, caprique, laurique, myristique, palmitique. Comme acides dicarboxyliques, on peut mentionner les acides oxalique, malonique, succinique, glutarique, adipique, pimélique, subérique, azélaïque et sébacique.

Les sels des acides carboxyliques peuvent aussi être utilisés, notamment les sels ammoniacaux.

A titre d'exemple, on peut citer plus particulièrement l'acide laurique et le laurate d'ammonium.

Enfin, il est possible d'utiliser un tensioactif qui est choisi parmi ceux du type éthoxylats d'alcools gras carboxyméthylés.

Par produit du type éthoxylats d'alcool gras carboxyméthylés on entend les produits constitués d'alcools gras éthoxylés ou propoxylés comportant en bout de chaîne un groupement CH₂-COOH.

Ces produits peuvent répondre à la formule :

R₁-O-(CR₂R₃-CR₄R₅-O)ₙ-CH₂-COOH

dans laquelle R₁ désigne une chaîne carbonée, saturée ou insaturée, dont la longueur est généralement d'au plus 22 atomes de carbone, de préférence d'au moins 12 atomes de carbone; R₂, R₃, R₄ et R₅ peuvent être identiques et représenter l'hydrogène ou encore R₂ peut représenter un groupe CH₃ et R₃, R₄ et R₅ représentent l'hydrogène; n est un nombre entier non nul pouvant aller jusqu'à 50 et plus particulièrement compris entre 5 et 15, ces valeurs étant incluses. On notera qu'un tensio-actif peut être constitué d'un mélange de produits de la formule ci-dessus pour lesquels R₁ peut être saturé et insaturé respectivement ou encore des produits comportant à la fois des groupements -CH₂-CH₂-O- et -C(CH₃)-CH₂-O-.

L'addition du tensio-actif peut se faire de deux manières. Il peut être ajouté directement dans la suspension de précipité issue de l'étape précédente de chauffage (c). Il peut aussi être ajouté au précipité solide après séparation de celui-ci par tout moyen connu du milieu dans lequel a eu lieu le chauffage.

La quantité de tensio-actif utilisée, exprimée en pourcentage en masse d'additif par rapport à la masse de la composition calculée en oxyde, est généralement comprise entre 5% et 100% plus particulièrement entre 15% et 60%.

Selon une mise en oeuvre spécifique du procédé, il est possible de soumettre le précipité en suspension à un broyage d'énergie moyenne en soumettant cette suspension à un cisaillement, par exemple en utilisant un broyeur colloïdal ou une turbine d'agitation.

A l'issue de l'étape (d) on procède à un lavage du précipité après l'avoir séparé du milieu dans lequel il se trouvait en suspension. Ce lavage peut se faire à l'eau, de préférence avec de l'eau à pH basique, par exemple de l'eau ammoniaquée.

Dans une dernière étape du procédé selon la première variante, le précipité récupéré est ensuite calciné. Cette calcination permet de développer la cristallinité du produit formé et elle peut être également ajustée et/ou choisie en fonction de la température d'utilisation ultérieure réservée à la composition selon l'invention, et ceci en tenant compte du fait que la surface spécifique du produit est d'autant plus faible que la température de calcination mise en oeuvre est plus élevée. Une telle calcination est généralement opérée sous air.

En pratique, on limite généralement la température de calcination à un intervalle de valeurs comprises entre 500 et 1000°C.

Les compositions de l'invention telles que décrites plus haut ou telles qu'obtenues dans le procédé étudié précédemment se présentent sous forme de poudres mais elles peuvent éventuellement être mises en forme pour se présenter sous forme de granulés, billes, cylindres ou nids d'abeille de dimensions variables.

Les compositions de l'invention peuvent être utilisées comme catalyseurs ou supports de catalyseur. Ainsi, l'invention concerne aussi des systèmes catalytiques comprenant les compositions de l'invention. Pour de tels systèmes, ces compositions peuvent ainsi être appliquées sur tout support utilisé habituellement dans le domaine de la catalyse, c'est à dire notamment des supports inertes thermiquement. Ce support peut être choisi parmi l'alumine, l'oxyde de titane, l'oxyde de cérium, l'oxyde de zirconium, la silice, les spinelles, les zéolites, les silicates, les phosphates de silicoaluminium cristallins, les phosphates d'aluminium cristallins.

Les compositions peuvent aussi être utilisées dans des systèmes catalytiques comprenant un revêtement (wash coat) à propriétés catalytiques et à base de ces compositions, sur un substrat du type par exemple monolithe métallique ou en céramique. Le revêtement peut comporter lui aussi un support du type de ceux mentionnés plus haut. Ce revêtement est obtenu par mélange de la composition avec le support de manière à former une suspension qui peut être ensuite déposée sur le substrat.

Ces systèmes catalytiques et plus particulièrement les compositions de l'invention peuvent trouver de très nombreuses applications. Ils sont ainsi particulièrement bien adaptés à, et donc utilisable dans la catalyse de diverses réactions telles que, par exemple, la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion, l'oxydation catalytique des suies émises par les moteurs à combustion interne comme les moteurs diesel ou essence fonctionnant en régime pauvre. Les systèmes catalytiques et les compositions de l'invention peuvent enfin être utilisés comme pièges à NOx ou pour favoriser la réduction des NOx même en milieu oxydant.

Dans le cas de ces utilisations en catalyse, les compositions de l'invention sont employées en combinaison avec des métaux précieux, elles jouent ainsi le rôle de support pour ces métaux. La nature de ces métaux et les techniques d'incorporation de ceux-ci dans les compositions supports sont bien connues de l'homme du métier. Par exemple, les métaux peuvent être le platine, le rhodium, le palladium ou l'iridium, ils peuvent notamment être incorporés aux compositions par imprégnation.

Parmi les utilisations citées, le traitement des gaz d'échappement des moteurs à combustion interne (catalyse post combustion automobile) constitue une application particulièrement intéressante. De ce fait, l'invention concerne aussi un procédé de traitement des gaz d'échappement des moteurs à combustion interne qui est caractérisé en ce qu'on utilise à titre de catalyseur un système catalytique tel que décrit ci-dessus ou une composition selon l'invention et telle que décrite précédemment.

Des exemples vont maintenant être donnés.

### EXEMPLE 1

Cet exemple concerne une composition à 40% de zirconium, 40% de cérium, 6% de lanthane et 14% d'yttrium, ces proportions étant exprimées en pourcentages massiques des oxydes ZrO₂,CeO₂, La₂O₃ et Y₂O₃.

Dans un bécher agité, on introduit 152 ml de nitrate de zirconium (264 g/l en ZrO₂), 163,9 ml de nitrate de cérium (244 g/l en CeO_{2,} 6.8% du cérium total sous forme Ce³⁺, le restant du cérium sous forme Ce⁴⁺ et 0,6 mol/l d'acidité libre), 13,2 ml de nitrate de lanthane (454 g/l en La₂O₃) et 36,6 ml de nitrate d'yttrium (382 g/l en Y₂O₃). On complète ensuite avec de l'eau distillée de façon à obtenir 1 litre d'une solution de nitrates.

Dans un réacteur agité, on introduit 253,4 ml d'une solution d'ammoniaque (12 mol/l) et on complète ensuite avec de l'eau distillée de façon à obtenir un volume total de 1 litre.

La solution de nitrates est introduite dans le réacteur sous agitation constante.

La solution obtenue est placée dans un autoclave en acier inoxydable équipé d'un mobile d'agitation. La température du milieu est portée à 150°C pendant 2 heures sous agitation.

On ajoute à la suspension ainsi obtenue 33 grammes d'acide laurique. La suspension est maintenue sous agitation pendant 1 heure.

La suspension est alors filtrée sur Büchner, puis on lave le précipité filtré avec de l'eau ammoniaquée. Le produit obtenu est ensuite porté à 700°C pendant 4 heures en palier.

### EXEMPLES 2 A 8

On procède de la même façon que dans l'exemple 1. Les compositions et quantités de réactifs mis en oeuvre sont indiquées dans les tableaux 1 et 2 respectivement ci-après. Pour l'exemple 6, la solution de nitrate de gadolinium présente une concentration de 380 g/l en Gd₂O₃. Pour l'exemple 7, la solution de nitrate de samarium présente une concentration de 369 g/l en Sm₂O₃.

**Tableau 1 des compositions**

| Les proportions sont exprimées en pourcentages massiques des oxydes | | | | | | |
|---|---|---|---|---|---|---|
| Exemple | %Zr | %Ce | %La | %Y | %Gd | %Sm |
| 2 | 45 | 40 | 2,8 | 12,2 | - | - |
| 3 | 37,9 | 40 | 10,7 | 11,4 | - | - |
| 4 | 40 | 40 | 11,8 | 8,2 | - | - |
| 5 | 45 | 40 | 7,3 | 7,7 | - | - |
| 6 | 37,9 | 40 | 10,7 | - | 11,4 | - |
| 7 | 37,9 | 40 | 10,7 | - | - | 11,4 |
| 8 | 48 | 30 | 11 | 11 | - | - |

**Tableau 2 des quantités de réactifs**

| Les quantités sont exprimées en volume (ml) des solutions d'ammoniaque ou de nitrate des éléments concernés | | | | | | |
|---|---|---|---|---|---|---|
| Exemple | Zr | Ce | La | Y | Gd/Sm | ammoniaque |
| 2 | 170 | 163,9 | 6,2 | 31,9 | - | 250,8 |
| 3 | 144 | 163,9 | 23,6 | 29,8 | - | 251,2 |
| 4 | 152 | 163,9 | 26 | 21,5 | - | 247,8 |
| 5 | 170 | 163,9 | 16,1 | 20,2 | - | 246,5 |
| 6 | 144 | 163,9 | 23,6 | - | 30 | 251,2 |
| 7 | 144 | 163,4 | 23,6 | - | 30,9 | 251,2 |
| 8 | 182 | 122,9 | 24,2 | 28,8 | - | 241 |

Afin de déterminer leur stabilité thermique, les compositions ont été soumises à des calcinations sous air à différentes températures. Les surfaces spécifiques mesurées après ces traitements thermiques sont reportées dans le tableau 3 suivant. Les valeurs sont exprimées en m²/g.

**Tableau 3**

| Exemple | 4h/1000°C | 10h/1150°C | 10h/1200°C |
|---|---|---|---|
| 1 | 54 | 20 | 10 |
| 2 | 54 | 15 | 8 |
| 3 | 56 | 20 | 12 |
| 4 | 56 | 20 | 7 |
| 5 | 55 | 16 | 5 |
| 6 | 49 | 15 | 7 |
| 7 | 47 | 16 | 7 |
| 8 | 53 | 15 | 6 |

Après un traitement thermique pendant 10 heures à 1150°C sous air, l'analyse par les rayons X de ces compositions fait systématiquement apparaître une phase unique de symétrie cubique. Les analyses sont effectuées sur poudre à l'aide d'un diffractomètre Panalytical équipé d'un détecteur multicanal de type X'Celerator et d'un monochromateur Kβ/Kα. Les données sont collectées en 20 minutes entre 2θ = 10 et 2θ = 95° avec un pas de 0,017 mm.

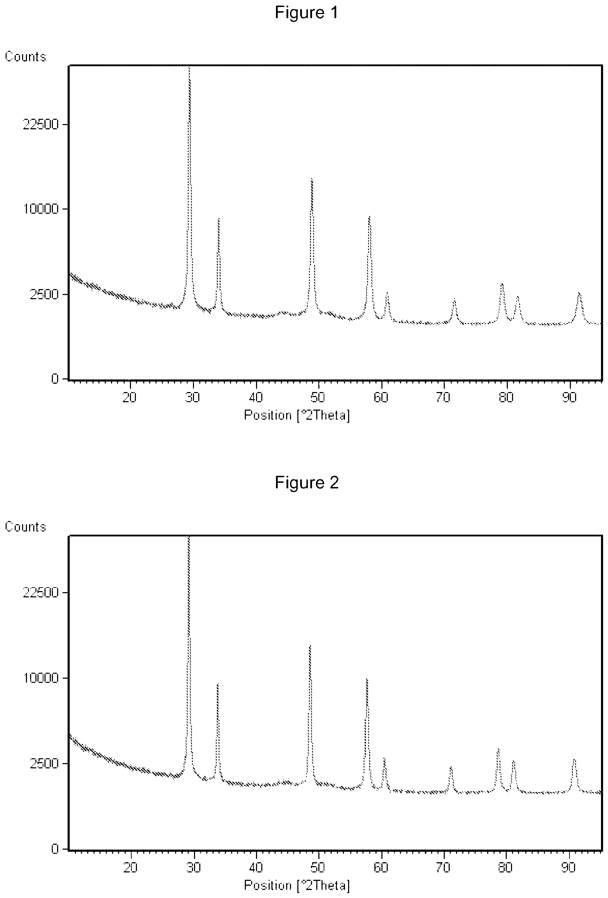

Les figures 1 et 2 sont les diffractogrammes obtenus par diffraction des rayons X sur les compositions des exemples 1 et 6 respectivement.

### EXEMPLE 9 COMPARATIF

Cet exemple concerne une composition à 50% de zirconium, 40% de cérium, 5% de lanthane et 5% d'yttrium, ces proportions étant exprimées en pourcentages massiques des oxydes ZrO₂, CeO2, La₂O₃ et Y₂O₃. La proportion en lanthane et en yttrium est inférieure à celle en ces mêmes éléments des compositions selon l'invention. Les quantités de réactifs mis en oeuvre pour la préparation de cette composition et les surfaces spécifiques de celle-ci à différentes températures sont indiquées respectivement dans les tableaux 4 et 5 ci-dessous.

**Tableau 4**

| Les quantités sont exprimées en volume (ml) des solutions d'ammoniaque ou de nitrate des éléments concernés | | | | | |
|---|---|---|---|---|---|
| Exemple | Zr | Ce | La | Y | ammoniaque |
| 9 | 189 | 163,9 | 11,1 | 13,1 | 243 |

**Tableau 5**

| Valeurs en m²/g | | | |
|---|---|---|---|
| Exemple | 4h/1000°C | 10h/1150°C | 10h/1200°C |
| 9 | 45,6 | 9 | 3 |

Les exemples qui suivent montrent l'intérêt du procédé selon la seconde variante pour l'obtention de compositions à réductibilité améliorée.

La mesure du taux de réductibilité été conduite dans les conditions suivantes.

### Taux de réductibilité

Le taux de réductibilité du cérium est mesuré en effectuant une réduction en température programmée sur un appareil Ohkura Riken TP5000. Cet appareil permet de mesurer la consommation d'hydrogène d'une composition selon l'invention en fonction de la température et d'en déduire le taux de réduction du cérium.

Plus précisément, on utilise l'hydrogène comme gaz réducteur à 10% en volume dans l'argon avec un débit de 30 mL/mn. Le protocole expérimental consiste à peser 200 mg de l'échantillon dans un récipient préalablement taré. L'échantillon est ensuite introduit dans une cellule en quartz contenant dans le fond de la laine de quartz. L'échantillon est enfin recouvert de laine de quartz et positionné dans le four de l'appareil de mesure. Le programme de température est le suivant :
- oxydation : montée en température jusqu'à 500°C avec une rampe de montée à 10°C/mn sous O₂ à 5%vol dans He;
- palier de 30 mn puis descente à 30°C;
- traitement à 30°C sous Ar pendant 20 mn;
- réduction : montée en température jusqu'à 900°C avec une rampe de montée à 20°C/mn sous H₂ à 10 %vol dans Ar;
- calibration;
- descente en température sous Ar de 900°C à 30°C.

Lors de ce programme, la température de l'échantillon est mesurée à l'aide d'un thermocouple placé dans la cellule de quartz au-dessus de l'échantillon. La consommation d'hydrogène lors de la phase de réduction est déduite grâce à la calibration de la variation de la conductivité thermique du flux gazeux mesurée en sortie de la cellule à l'aide d'un détecteur de conductivité thermique (TCD).

Le taux de réduction du cérium est calculé à partir de la consommation d'hydrogène mesurée entre 30°C et 900°C.

### EXEMPLE 10

Cet exemple concerne une composition à 40% de zirconium, 38% de cérium, 11% de lanthane et 11% d'yttrium, ces proportions étant exprimées en pourcentages massiques des oxydes ZrO₂, CeO₂, La₂O₃ et Y₂O₃.

Dans un bécher agité, on introduit 145 ml de nitrate de zirconium (265 g/l en ZrO₂), 145 ml de nitrate de cerium (254g/l en CeO₂), 24 ml de nitrate de lanthane (456 g/l en La₂O₃) et 27 ml de nitrate d'yttrium (382 g/l en Y₂O₃). On complète ensuite avec de l'eau distillée de façon à obtenir 1 litre d'une solution de nitrates.

Dans un réacteur agité, on introduit 225 ml d'une solution d'ammoniaque (12 mol/l) et on complète ensuite avec de l'eau distillée de façon à obtenir un volume total de 1 litre.

La solution de nitrates est introduite en une heure dans le réacteur sous agitation constante.

La suspension ainsi obtenue est placée dans un autoclave en acier inoxydable équipé d'un mobile d'agitation. La température du milieu est portée à 150°C pendant 2 heures sous agitation.

On ajoute à la suspension ainsi obtenue 33 grammes d'acide laurique. La suspension est maintenue sous agitation pendant 1 heure.

La suspension est alors filtrée sur Büchner, puis on ajoute sur le précipité filtré de l'eau ammoniaquée à raison d'une fois le volume des eaux-mères de filtration.

Le précipité obtenu après filtration et lavage est ensuite calciné sous air 4 heures à 900°C.

### EXEMPLE 11

On prépare la même composition que dans l'exemple 10 en procédant de la même manière jusqu'à l'étape de calcination.

On procède ensuite à une première calcination sous gaz inerte à 1000°C pendant 4h. Après retour à l'ambiante, on procède à une seconde calcination sous air à 700°C pendant 4h.

On donne dans les tableaux qui suivent les caractéristiques de réductibilité et de surface spécifique des produits des exemples 10 et 11.

Les valeurs de surface et de réductibilité données ont été mesurées sur des produits obtenus selon le procédé décrit dans les exemples et qui ont subi de nouveau une calcination aux températures et pendant les durées indiquées dans les tableaux.

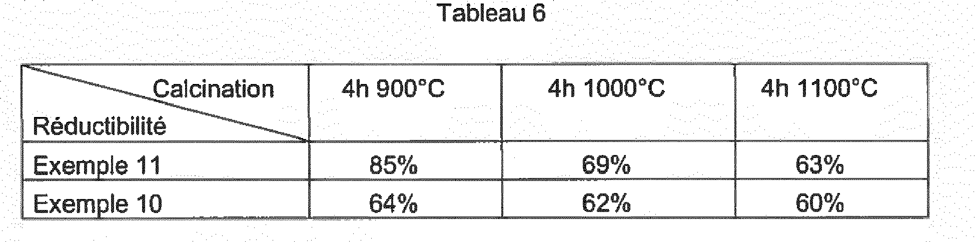

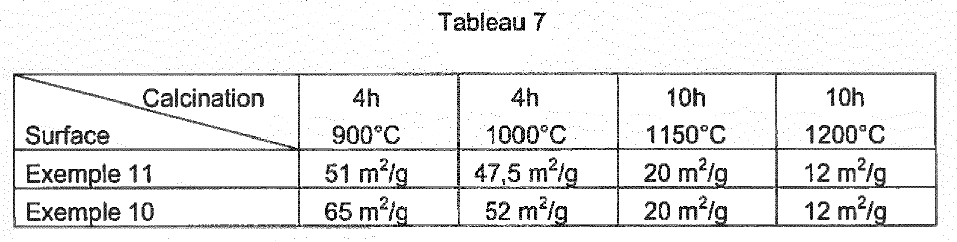

On précise qu'après calcination 10h à 1150°C les produits des exemples 10 et 11 se présentent sous la forme d'une phase cristalline unique cubique.

On voit que la composition selon l'exemple 11 présente une réductibilité à 900°C, 1000°C et 1100°C nettement améliorée tout en gardant une surface spécifique importante même à des températures élevées.

## Revendications

1. Composition consistant en un mélange de quatre oxydes des éléments zirconium, cérium, lanthane et d'une terre rare qui est soit l'yttrium, le samarium ou le gadolinium, **caractérisée en ce qu'**elle présente les caractéristiques suivantes :
- une surface spécifique après calcination 4 heures à 1000°C d'au moins 45 m²/g ;
- une surface spécifique après calcination 10 heures à 1150°C d'au moins 15 m²/g ;
- une surface spécifique après calcination 10 heures à 1200°C d'au moins 7 m²/g ;
- une teneur en oxyde de cérium comprise entre 30% et 45% ;
- une teneur en oxyde de lanthane et en oxyde de l'autre terre rare comprise entre 15% et 35%, la teneur en oxyde de lanthane étant d'au moins 2%.

2. Composition selon la revendication 1, **caractérisée en ce qu'**elle présente une surface spécifique après calcination 4 heures à 1000°C d'au moins 50 m²/g.

3. Composition selon la l'une des revendications précédentes, **caractérisée en ce qu'**elle présente une surface spécifique après calcination 10 heures à 1150°C d'au moins 18 m²/g.

4. Composition selon l'une des revendications précédentes, **caractérisée en ce qu'**elle présente une surface spécifique après calcination 10 heures à 1200°C d'au moins 10 m²/g.

5. Composition selon l'une des revendications précédentes, **caractérisée en ce qu'**elle présente une teneur en lanthane et en l'autre terre rare dans un rapport masse d'oxyde de lanthane/masse d'oxyde de l'autre terre rare inférieur à 1,5, plus particulièrement inférieur à 1.

6. Composition selon l'une des revendications 1 à 4 ou selon la revendication 5, **caractérisée en ce qu'**elle présente une teneur en cérium comprise entre 40% et 45%.

7. Système catalytique, **caractérisé en ce qu'**il comprend un revêtement à propriétés catalytiques et à base d'une composition selon l'une des revendications 1 à 6 sur un substrat du type monolithe métallique ou en céramique.

8. Procédé de traitement des gaz d'échappement des moteurs à combustion interne, **caractérisé en ce qu'**on utilise à titre de catalyseur un système catalytique selon la revendication 7 ou une composition selon l'une des revendications 1 à 6.

## Patentansprüche

1. Zusammensetzung, bestehend aus einer Mischung von vier Oxiden der Elemente Zirconium, Cer, Lanthan und einer seltenen Erde, bei der es sich um Yttrium, Samarium oder Gadolinium handelt, **dadurch gekennzeichnet, dass** sie die folgenden Eigenschaften aufweist:
- eine spezifische Oberfläche nach 4 Stunden Calcinierung bei 1000 °C von mindestens 45 m²/g;
- eine spezifische Oberfläche nach 10 Stunden Calcinierung bei 1150 °C von mindestens 15 m²/g;
- eine spezifische Oberfläche nach 10 Stunden Calcinierung bei 1200 °C von mindestens 7 m²/g;
- einen Gehalt an Ceroxid zwischen 30 % und 45 %;
- einen Gehalt an Lanthanoxid und an Oxid der anderen seltenen Erde zwischen 15 % und 35 %, wobei der Gehalt an Lanthanoxid mindestens 2 % beträgt.

2. Zusammensetzung nach Anspruch 1, **dadurch gekennzeichnet, dass** sie eine spezifische Oberfläche nach 4 Stunden Calcinierung bei 1000 °C von mindestens 50 m²/g aufweist.

3. Zusammensetzung nach einem der vorhergehenden Ansprüche, **dadurch gekennzeichnet, dass** sie eine spezifische Oberfläche nach 10 Stunden Calcinierung bei 1150 °C von mindestens 18 m²/g aufweist.

4. Zusammensetzung nach einem der vorhergehenden Ansprüche, **dadurch gekennzeichnet, dass** sie eine spezifische Oberfläche nach 10 Stunden Calcinierung bei 1200 °C von mindestens 10 m²/g aufweist.

5. Zusammensetzung nach einem der vorhergehenden Ansprüche, **dadurch gekennzeichnet, dass** sie einen Gehalt an Lanthan und an der anderen seltenen Erde in einem Gewichtsverhältnis von Lanthanoxid zu Oxid der anderen seltenen Erde von weniger als 1,5, spezielles weniger als 1, aufweist.

6. Zusammensetzung nach einem der Ansprüche 1 bis 4 oder nach Anspruch 5, **dadurch gekennzeichnet, dass** sie einen Cergehalt zwischen 40 % und 45 % aufweist.

7. Katalytisches System, **dadurch gekennzeichnet, dass** es eine Beschichtung mit katalytischen Eigenschaften auf der Basis einer Zusammensetzung nach einem der Ansprüche 1 bis 6 auf einem Substrat vom Typ Metall- oder Keramik-Monolith umfasst.

8. Verfahren zur Behandlung von Abgasen von Verbrennungsmotoren, **dadurch gekennzeichnet, dass** man als Katalysator ein katalytisches System nach Anspruch 7 oder eine Zusammensetzung nach einem der Ansprüche 1 bis 6 verwendet.

## Claims

1. Composition consisting of a mixture of four oxides of the elements zirconium, cerium, lanthanum and a rare-earth element which is either yttrium, samarium or gadolinium, **characterized in that** it has the following characteristics:
- a specific surface area after calcination for 4 hours at 1000°C of at least 45 m²/g;
- a specific surface area after calcination for 10 hours at 1150°C of at least 15 m²/g;
- a specific surface area after calcination for 10 hours at 1200°C of at least 7 m²/g;
- a content of cerium oxide of between 30% and 45%;
- a content of lanthanum oxide and of oxide of the other rare-earth element of between 15% and 35%, the content of lanthanum oxide being at least of 2%.

2. Composition according to Claim 1, **characterized in that** it has a specific surface area after calcination for 4 hours at 1000°C of at least 50 m²/g.

3. Composition according to either of the preceding claims, **characterized in that** it has a specific surface area after calcination for 10 hours at 1150°C of at least 18 m²/g.

4. Composition according to one of the preceding claims, **characterized in that** it has a specific surface area after calcination for 10 hours at 1200°C of at least 10 m²/g.

5. Composition according to one of the preceding claims, **characterized in that** it has a content of lanthanum and of the other rare-earth element in a weight of lanthanum oxide/weight of oxide of the other rare-earth element ratio of less than 1.5, more particularly less than 1.

6. Composition according to one of Claims 1 to 4 or according to Claim 5, **characterized in that** it has a content of cerium of between 40% and 45%.

7. Catalytic system, **characterized in that** it comprises a coating having catalytic properties and based on a composition according to one of Claims 1 to 6 on a substrate of ceramic or metallic monolith type.

8. Process for treating the exhaust gases of internal combustion engines, **characterized in that** use is made, as catalyst, of a catalytic system according to Claim 7 or a composition according to one of Claims 1 to 6.
